# EUROPÄISCHE PATENTSCHRIFT

(11) **EP 1 397 603 B1**
(45) Veröffentlichungstag und Bekanntmachung des Hinweises auf die Patenterteilung: **12.04.2006**
(21) Anmeldenummer: 02743077.6
(22) Anmeldetag: 23.05.2002
(51) Int. Cl.: F16G 5/16

(54) **SCHWINGUNGSARMER HYBRIDKEILRIEMEN**
LOW-VIBRATION HYBRID V-BELT
COURROIE TRAPEZOIDALE HYBRIDE A VIBRATIONS LIMITEES

(30) Priorität: 02.06.2001 DE 10127092
(43) Veröffentlichungstag der Anmeldung: 17.03.2004
(73) Patentinhaber: ContiTech Antriebssysteme GmbH, 30165 Hannover (DE)
(72) Erfinder: SATTLER, Heiko, 30175 Hannover (DE)
(74) Vertreter: Finger, Karsten
(86) Internationale Anmeldenummer: PCT/EP2002/005647
(87) Internationale Veröffentlichungsnummer: WO 2002/099310

(56) Entgegenhaltungen:
- EP-A- 0 826 901
- US-A- 4 457 742
- PATENT ABSTRACTS OF JAPAN vol. 017, no. 651 (M-1519), 3. Dezember 1993 (1993-12-03) & JP 05 209652 A (MITSUBOSHI BELTING LTD), 20. August 1993 (1993-08-20)

## Beschreibung

Die Erfindung betrifft einen Hybridkeilriemen, bestehend aus mindestens einem Zugträger sowie einer Vielzahl daran angeordneter Stützelemente.

Vorbekannt sind eine Reihe verschiedener Bauformen von Hybridkeilriemen mit versteifenden Stützelementen. Aufgrund der hohen Drehmomente, die in Antrieben mit derartigen Riemen zu übertragen sind, kommt es zu großen Trumkraftdifferenzen und damit auch zu sehr geringen Leertrumkräften. Insbesondere in solchen Betriebszuständen neigen die freien Trume eines Riemens zu transversalen Schwingungen. Derartige Transversalschwingungen treten bevorzugt in zwei Ebenen auf, zum einen mit Ausschlägen in Richtung der Riemenhöhe und zum anderen in Riemenbreitenrichtung.

In einer vorbekannten Bauform (EP 0 826 901 A2) sind die versteifenden Stützelemente aus Riemenlängsrichtung betrachtet an ihren Vorder- und Rückseiten mit Führungsnasen und korrespondierenden Vertiefungen ausgerüstet, die in einer einen Kern umgebenden Kunststoffschicht ausgebildet sind. Die Nasen und Vertiefungen sind zentral auf den in Riemenlaufrichtung weisenden Stirn- und Rückseiten der Stützelemente angeordnet, indem sie in mittig in Riemenbreitenrichtung und etwa mittig in radialer Richtung auf Höhe der Zugstränge platziert sind. Diese Nasen und Vertiefungen weisen die Form von Kegelstümpfen oder Halbkugelstümpfen auf. In weiteren Bauformen sind solche Führungselemente nicht vorhanden.

Die Aufgabe der vorliegenden Erfindung, die im wesentlichen mit den Merkmalen des Anspruchs 1 gelöst ist, besteht in der Implementierung einer großen Eigendämpfung bei Hybridkeilriemen. Transversale Trumschwingungen mit aufklingenden oder stationär großen Amplituden sollen vermieden werden.

Die Ausbildung von in radialer Richtung oberhalb der Mitte und in Riemenbreitenrichtung bevorzugt symmetrisch angeordneten Dämpfungselementen begrenzt gleichzeitig mögliche Transversalschwingungen in zwei zueinander senkrechten Ebenen und minimiert somit die Schwingungsamplituden. In radialer Richtung wird die Auslenkung radial einwärts ausgehend vom gestreckten Zustand begrenzt, in Riemenbreitenrichtung wird die Amplitude in beiden Richtungen gegenüber dem geraden Zustand ohne Schwingungsbäuche begrenzt.

Während in einer bekannten Bauform Führungselemente aus relativ hartem und verformungsarmem harzbasierten Kunststoff eingesetzt werden, die aufgrund der praktisch nicht vorhandenen Materialeigendämpfung kaum Schwingungsenergie aufzuzehren in der Lage sind, kommen erfindungsgemäß Dämpfungselemente zum Einsatz, die bevorzugt z. B. aus Elastomeren mit einer ausgeprägt hohen Materialeigendämpfung bestehen.

Diese Dämpfungselemente werden vorteilhafterweise in Vertiefungen oder Bohrungen eingesetzt, die ohnehin nach der Fertigung an den Stützelementen vorhanden sind.

Die Dämpfungselemente und ihre Gegenformen sind zylindrisch ausgeführt, wobei die Kanten der Nasen mit Radien oder Fasen versehen sind, die ein zwangs- und stoßfreies Ineinanderfassen der zugehörigen Formen gestatten. Die zylindrische Form als einfaches Zentrierungselement ist in vielen Fällen fertigungsbedingt vorhanden und muss in diesem Fall nicht eigens erzeugt werden.

Wird auf die ausgeprägte Dämpfungswirkung des Materials wie bei Elastomeren vorhanden verzichtet, können die Nasen und Vertiefungen aus dem Basismaterial oberhalb der Mitte angeformt werden.

Die Radien gestatten darüber hinaus eine Verbesserung des Laufverhaltens durch gegenseitiges Einlaufen und Einstellung der einander zugehörigen Formen während der ersten Betriebsstunden.

Die Befestigung und Zentrierung der Dämpfungselemente erfolgt vorzugsweise durch Formschluss in Kemmaterial und Kunststoffhülle, durch Formschluss nur in der Hülle oder durch Stoffschluss mit adhäsiven bzw. kohäsiven Materialbindungen.

Die Dämpfungswirkung kann je nach Materialeigenschaften dadurch erzielt werden, dass entweder ein Dämpfungselement als hervorstehende Oberfläche ohne speziell angeformte Gegenfläche ausgeführt wird oder dass eine Kombination von Nase und Vertiefung an der Stirn- bzw. Rückseite des einen Stützelementes und der Gegenfläche des anderen Stützelementes eingebracht wird.

Die Dämpfungselemente können im wesentlichen symmetrisch zur Achse eines Stützelementes in Riemenbreitenrichtung und auf dem oberen, d. h. radial nach außen gerichteten Teil der Stirn- bzw. Rückseite eines Stützelementes angeordnet sein.

Im folgenden werden die erfindungsgemäßen Dämpfungselemente anhand der Abbildungen näher erläutert. Es zeigt:
Fig. 1: Ansichten aus Riemenlängsrichtung bekannter Bauformen mit zusätzlichen Dämpfungselementen, und zwar:
   Fig. 1a ein einteiliges, seitlich geschlitztes Stützelement mit versteifendem Kern im oberen Bereich;
   Fig. 1b ein einteiliges, symmetrisches Stützelement mit versteifendem Kern im oberen Bereich;
   Fig. 1c ein zweiteiliges, verschraubtes Stützelement mit Teilfuge in Riemenbreitenrichtung; und
   Fig. 1d ein zweiteiliges Stützelement mit Klammern und Teilfuge in radialer Richtung;

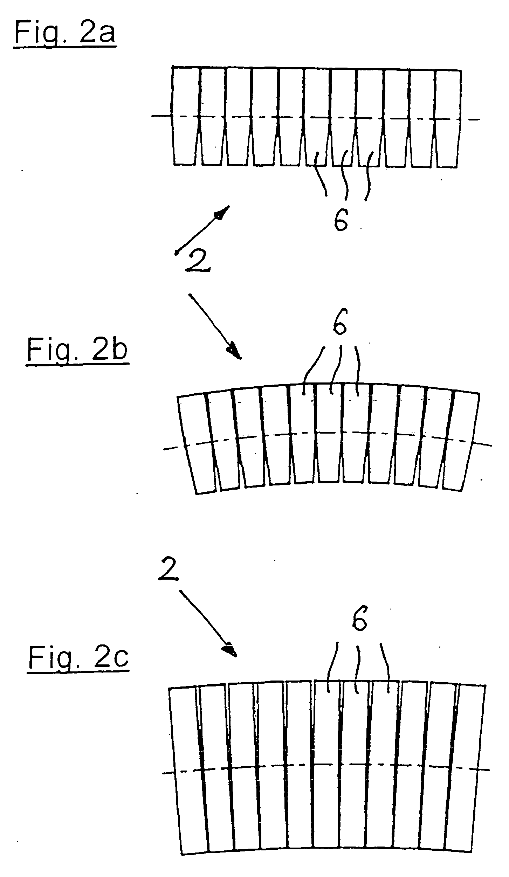

Fig. 2a einen Riemenquerschnitt mit Stützelementen im gestreckten Zustand in Seitenansicht ohne Dämpfungselemente;
Fig. 2b ein unter Schwingungen ausgelenktes Trum in Seitenansicht; und
Fig. 2c ein unter Schwingungen ausgelenktes Trum in Draufsicht;
Fig. 3 und Fig. 4 zeigen Teilschnitte im oberen Bereich durch zwei Stützelemente aus Seitenansicht jeweils bei maximaler Krümmung (Fig. 3 a, 3b und Fig. 4a, 4b) und in gestrecktem Zustand (Fig. 3c, 3d und Fig. 4c, 4d), und zwar:
Fig. 3a, 3c einen Elastomerdämpfer geführt im Kern und der umgebenden Schicht mit Gegenform auf der Rückseite;
Fig. 3b, 3d einen Elastomerdämpfer geführt im Kern und der umgebenden Schicht ohne Gegenform auf der Rückseite;
Fig. 4a, 4c einen Dämpfer in umgebenden Kunststoff integriert; und
Fig. 4b, 4d einen Elastomerdämpfer nur in der umgebenden Schicht geführt ohne Gegenform auf der Rückseite.

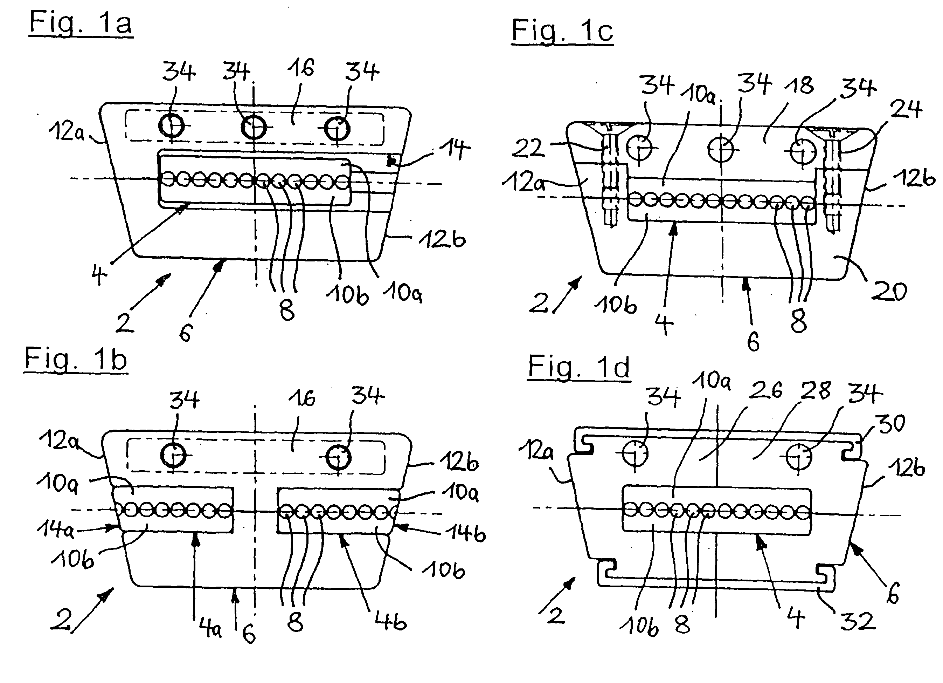

Die in den Fig. 1a bis 1d dargestellten Ausführungsformen des erfindungsgemäßen Hybridkeilriemens 2 bestehen aus jeweils mindestens einem Zugträger (Lastträger) 4 bzw. 4a und 4b sowie einer Vielzahl von Stützelementen (Stützblöcken) 6. Der mindestens eine Zugträger 4; 4a, 4b ist mit Zugsträngen 8 verstärkt, die typischerweise aus Glasfasern, Aramid- oder Stahlcorden bestehen. An Ober- und/oder Unterseite sind die Zugstränge 8 von Elastomerkörpern 10a, 10b umgeben, die ihrerseits optional durch Gewebeschichten nach außen hin bedeckt sind. Die Stützblöcke 6 sind aus einem Material höheren Verformungswiderstandes als der mindestens eine Lastträger 4; 4a, 4b, vorzugsweise aus Aluminium, hergestellt.

Wie aus den Figuren 1a bis 1d ersichtlich, weisen die verschiedenen Ausführungsformen eines erfindungsgemäßen Stützblockes 6 in etwa einen trapezförmigen Querschnitt auf. Dabei sind zwei sich gegenüberstehende Seitenflächen 12a, 12b in der Weise zueinander geneigt, dass sie zu den Flanken einer (nicht dargestellten) Riemenscheibe korrespondieren.
Die Stützblöcke 6 können ein- (Fig. 1a, Fig. 1b) oder zweiteilig (Fig. 1c, Fig. 1d) sein.

Das in Fig. 1a dargestellte Stützelement 6 weist seitlich einen Schlitz 14 zur Aufnahme eines Zugträgers 4 auf. In den Zugträger 4 sind Zugstränge 8 in Längsrichtung eingebettet. Zur Beeinflussung der Schwerpunktslage und zur Versteifung ist in den in Fig. 1a und 1b dargestellten Stützelementen 6 ein Verstärkungsteil (versteifender Kern) 16 höheren spezifischen Gewichts eingebettet.

Gemäß Fig. 1b ist in beiden, sich jeweils gegenüberstehenden Seitenflächen 12a, 12b jeweils ein Schlitz 14a, 14b eingebracht. Diese beiden Schlitze 14a, 14b verlaufen von den Seitenflächen 12a, 12b in Richtung auf den mittleren Bereich des Stützblockes 6.

Beidseitig ist der Stützblock 6 mit jeweils einem Lastträger (Zugträger) 4a, 4b versehen, die jeweils in die seitlichen Schlitze 14a, 14b eingelegt sind. Auch hier sind in den Lastträgern 4a, 4b endlose Zugstränge 8 eingebettet.

Die in Fig. 1c und Fig. 1d dargestellten Stützelemente 6 sind zweiteilig, und zwar weist das Stützelement 6 gemäß Fig. 1c ein Ober- 18 und ein Unterteil 20 auf, die mittels Schrauben 22, 24 zusammengehalten werden.
Das Stützelement 6 gemäß Fig. 1d weist links/rechts-symmetrische Teile 26, 28 auf, die mittels Klammern 30, 32 miteinander verbunden sind.

Die in den Figuren 1a bis 1d mit "34" bezeichneten Kreise stellen die erfindungsgemäßen Dämpfungselemente dar. Die Dämpfungselemente 34, die z. B. aus Elastomer bestehen und eine hohe Materialeigendämpfung aufweisen, werden vorzugsweise in Vertiefungen oder Bohrungen eingesetzt, die sich in radialer Richtung oberhalb der Mitte befinden.

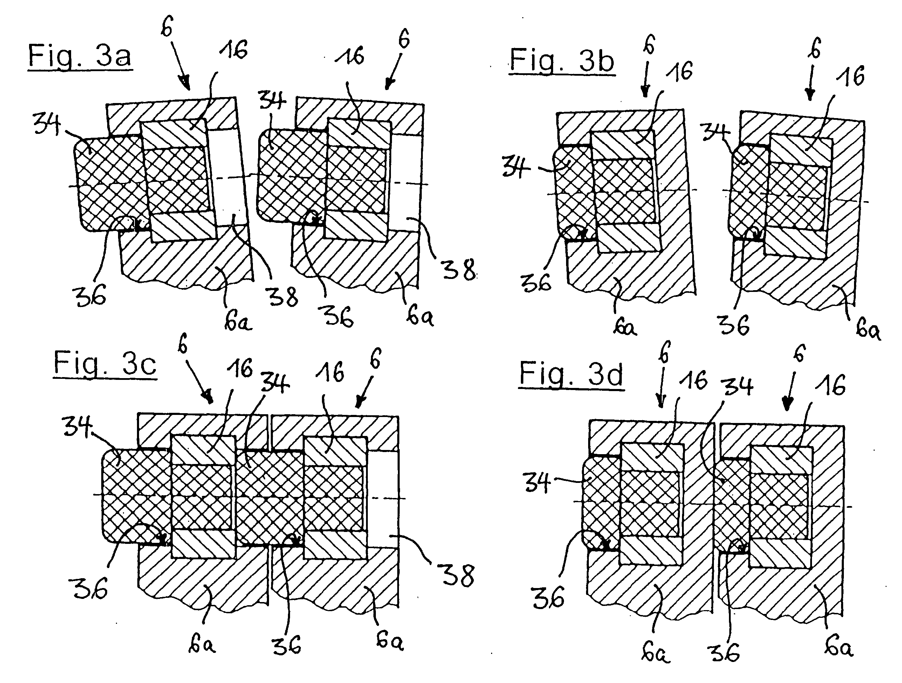

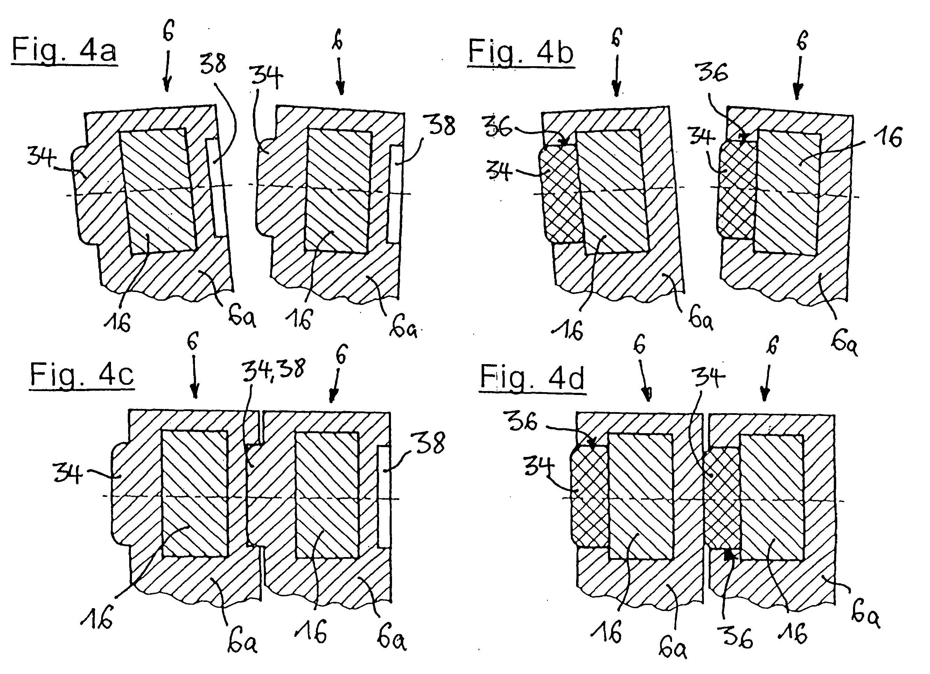

Die Ausführung der Dämpfungselemente 34 ist beispielhaft in den Figuren 3 und 4 dargestellt, die jeweils in Seitenansicht einen Schnitt durch den oberen, radial nach außen gerichteten Teil eines Stützelementes 6 mit Verstärkungsteil 16 gemäß Figur 1a wiedergeben.

Fig. 3a zeigt einen Schnitt durch zwei hintereinander angeordnete Stützelemente 6 unter Krümmung des Riemens (hier nicht dargestellt), Figur 3c im gestreckten Trum. In der Kunststoffhülle 6a des Stützelementes 6 und in dem verstärkenden Kern 16 sind aus produktionstechnischen oder anderen Gründen vorzugsweise zylindrische Aussparungen 36 vorhanden, in die Dämpfungselemente 34 vorzugsweise mit korrespondierenden Formen - hier in Form eines abgesetzten Zylinders - eingesetzt sind.

In der Ausführung gemäß Figuren 3a und 3c sind die Dämpfungselemente 34 in Aussparungen 38 des verstärkenden Kerns 16 und der umgebenden Kunststoffhülle 6a eingesetzt. Auf der Rückseite der Stützelemente 6 sind analog der Stirnseite ebenfalls Aussparungen 38 vorhanden, in die die über die Stirnfläche hinausragenden Dämpfungselemente 34 des dahinter angeordneten Stützelementes 6 zwangs- und stoßfrei hineinfassen können. Ein Verklemmen bei der Eingriffsbewegung wird durch Rundungen oder Fasen an den Hohlformen 38 und/oder an den Dämpfungselementen 34 - wie in den Figuren dargestellt - vermieden.

In Figur 3b und 3d sind wiederum Schnitte von zwei hintereinanderliegenden Stützelementen 6 im Zustand der Krümmung und des gestreckten Trums dargestellt. Die Dämpfungselemente 34 sind in den verstärkenden Kern 16 und die umgebende Kunststoffhülle 6a eingesetzt. Auf der Rückseite desselben Stützelementes 6 ist jedoch keine Gegenform 38 angebracht, sondern die Dämpfungswirkung wird mit vergleichsweise kurzen Dämpfungselementen 34 gegen eine im wesentlichen ebene Rückseite am vorstehenden Stützelement 6 erzielt.

Figur 4a und 4c zeigen eine Ausführung von Dämpfungselementen 34 mit zueinander korrespondierenden Formen ("Dämpfungselement" 34, "Gegenform" 38) an Stirn- und Rückseite eines Stützelementes 6, in der die Materialeigendämpfung der Umhüllung 6a genutzt wird. In der Darstellung bei gestrecktem Trum 4c wird die Unterstützung der Eingriffsbewegung durch die Rundungen an den Dämpfungselementen 34 ersichtlich.

Bei der Ausführung gemäß Figur 4b und 4d sind die Dämpfungselemente 34 allein in eine stirnseitige Aussparung 36 der umgebenden Hülle 6a eingesetzt, ohne dass sich eine korrespondierende Gegenform (38) auf der Rückseite des nächsten Elementes 6 befindet. Die Dämpfungswirkung wird hier analog der Ausführung in den Figuren 3b und 3c gegen eine im wesentlichen ebene Fläche erzielt.

Die Befestigung der Dämpfungselemente 34 in ihrer führenden Aussparung 36 wird durch Passungen (Fig. 3a, Verstärkungsteil mit umgebender Hülle), Formschluss (Fig. 4b, Anlage am Kern) und Stoffschluss bzw. eine Kombination dieser Maßnahmen erzielt.

### Bezugszeichenliste

- 2: Hybridkeilriemen
- 4; 4a, 4b: Lastträger, Zugträger
- 6: Stützblock, Stützelement
- 6a: Kunststoffhülle des Stützelementes 6
- 8: Zugstränge
- 10a, 10b: Elastomerkörper
- 12a, 12b: Seitenflächen des Stützblockes 6
- 14; 14a, 14b: Schlitz
- 16: Verstärkungsteil des Stützelementes 6, verstärkender Kern
- 18: Oberteil eines Stützblocks 6
- 20: Unterteil eines Stützblocks 6
- 22, 24: Schrauben
- 26, 28: links/rechts-symmetrische Teile eines Stützblockes 6
- 30, 32: Klammern
- 34: Dämpfungselement, konvexes Teil
- 36: Aussparung, Bohrung, Vertiefung
- 38: Aussparung, Hohlform, Gegenform

## Patentansprüche

1. Schwingungsarmer Hybridkeilriemen (2),
bestehend aus mindestens einem Zugträger (4; 4a, 4b) sowie einer Vielzahl daran angeordneter Stützelemente (6),
**gekennzeichnet durch**
Ausbildung von Dämpfungselementen (34) in radialer Richtung oberhalb der Mitte und im wesentlichen symmetrisch zur Symmetrieachse der Stützelemente (6) in Riemenbreitenrichtung.

2. Hybridkeilriemen nach Anspruch 1,
**dadurch gekennzeichnet,**
**dass** die Dämpfungselemente (34) eine ausreichende Materialeigendämpfung aufweisen.

3. Hybridkeilriemen nach Anspruch 1 oder 2,
**dadurch gekennzeichnet,**
**dass** die Dämpfungselemente (34) aus Elastomeren bestehen.

4. Hybridkeilriemen nach einem der Ansprüche 1 bis 3,
**dadurch gekennzeichnet,**
**dass** die Dämpfungselemente (34) in Vertiefungen oder Bohrungen (36) der Stützelemente (6) eingesetzt sind.

5. Hybridkeilriemen nach einem der Ansprüche 1 bis 4,
**dadurch gekennzeichnet,**
**dass** die Stützelemente (6) an ihren Rückseiten Gegenformen (38) aufweisen, die in Position und Gestalt zu den an den jeweiligen Vorderseiten angeordneten, konvex ausgebildeten Dämpfungselementen (34) korrespondieren, wobei die Kanten der konvexen Teile mit Radien und/oder Fasen versehen sind, die ein zwangs- und stoßfreies Ineinanderfassen der zugehörigen Formen (34/38) gestatten.

6. Hybridkeilriemen nach einem der Ansprüche 1 bis 5,
**dadurch gekennzeichnet,**
**dass** die konkaven und konvexen Formen (34/38) in einer Kunststoffhülle (6a) der Stützelemente (6) angeformt sind.

7. Hybridkeilriemen nach einem der Ansprüche 1 bis 6,
**dadurch gekennzeichnet,**
**dass** die Befestigung und Zentrierung der Dämpfungselemente (34)
- durch Formschluss in Kernmaterial (16) und Kunststoffhülle (6a),
- durch Formschluss nur in Kunststoffhülle (6a) und/oder
- durch Stoffschluss erfolgt.

8. Hybridkeilriemen nach einem der Ansprüche 1 bis 6,
**dadurch gekennzeichnet,**
**dass** die Dämpfung und Führung
- durch Anordnung von Dämpfungselementen (34) auf Stirn- bzw. Rückseite der Stützelemente (6) und/oder
- durch einander zugehörige Formen (34/38) auf der Rückseite des einen und der Stirnseite des anderen Stützelementes (6) erfolgt.

9. Hybridkeilriemen nach einem der Ansprüche 1 bis 8,
**dadurch gekennzeichnet,**
**dass** die Dämpfungselemente (34)
- zentral auf Stirn- und/oder Rückseite,
- auf der Symmetrieachse bzgl. der Riemenrichtung auf dem oberen Teil des Stützelementes (6), und/oder
- symmetrisch zur Symmetrieachse bzgl. Riemenbreitenrichtung auf dem oberen Teil des Stützelementes (6) angeordnet sind.

## Claims

1. Low-vibration hybrid V-belt (2), comprising at least one tensile load-bearing element (4; 4a, 4b) and a plurality of supporting elements (6) arranged thereon, **characterized by** forming damping elements (34) in a radial direction above the centre and substantially symmetrically in relation to the axis of symmetry of the supporting elements (6) in the direction of the belt width.

2. Hybrid V-belt according to Claim 1, **characterized in that** the damping elements (34) have adequate material-inherent damping.

3. Hybrid V-belt according to Claim 1 or 2, **characterized in that** the damping elements (34) consist of elastomers.

4. Hybrid V-belt according to one of Claims 1 to 3, **characterized in that** the damping elements (34) are fitted in depressions or bores (36) in the supporting elements (6).

5. Hybrid V-belt according to one of Claims 1 to 4, **characterized in that** the supporting elements (6) have on their rear sides counterforms (38), which correspond in position and shape to the convexly formed damping elements (34) arranged on the respective front sides, the edges of the convex parts being provided with roundings and/or chamfers which allow the associated forms (34/38) to engage in one another without being forced and without undergoing impact.

6. Hybrid V-belt according to one of Claims 1 to 5, **characterized in that** the concave and convex forms (34/38) are formed on in a plastic casing (6a) of the supporting elements (6).

7. Hybrid V-belt according to one of Claims 1 to 6, **characterized in that** the fastening and centring of the damping elements (34) takes place
- by a form fit in the core material (16) and plastic casing (6a),
- by a form fit only in the plastic casing (6a) and/or
- by material bonding.

8. Hybrid V-belt according to one of Claims 1 to 6, **characterized in that** the damping and guidance take place
- by arrangement of damping elements (34) on the front or rear side of the supporting elements (6) and/or
- by forms (34/38) associated with one another on the rear side of one and the front side of the other supporting element (6).

9. Hybrid V-belt according to one of Claims 1 to 8, **characterized in that** the damping elements (34) are arranged
- centrally on the front and/or rear side,
- on the axis of symmetry with respect to the direction of the belt on the upper part of the supporting element (6), and/or
- symmetrically in relation to the axis of symmetry with respect to the direction of the belt width on the upper part of the supporting element (6).

## Revendications

1. Courroie trapézoïdale hybride à vibrations limitées (2),
se composant d'au moins un support de traction (4 ; 4a, 4b) ainsi que d'une pluralité d'éléments de support (6) disposés dessus,
**caractérisée par**
la réalisation d'éléments d'amortissement (34) dans la direction radiale au-dessus du milieu et essentiellement symétriquement par rapport à l'axe de symétrie des éléments de support (6) dans la direction de la largeur de la courroie.

2. Courroie trapézoïdale hybride selon la revendication 1, **caractérisée en ce que**
les éléments d'amortissement (34) présentent un amortissement propre de matériau suffisant.

3. Courroie trapézoïdale hybride selon la revendication 1 ou 2, **caractérisée en ce que**
les éléments d'amortissement (34) se composent d'élastomères.

4. Courroie trapézoïdale hybride selon l'une quelconque des revendications 1 à 3,
**caractérisée en ce que**
les éléments d'amortissement (34) sont insérés dans des renfoncements ou des alésages (36) des éléments de support (6).

5. Courroie trapézoïdale hybride selon l'une quelconque des revendications 1 à 4,
**caractérisée en ce que**
les éléments de support (6) présentent, sur leurs côtés arrière, des formes conjuguées (38) qui correspondent de par leur position et leur forme aux éléments d'amortissement (34) réalisés sous forme convexe et disposés sur les côtés respectifs avant, les arêtes des parties convexes étant pourvues de rayons et/ou de biseaux qui permettent un engagement mutuel sans force et sans chocs des formes associées (34/38).

6. Courroie trapézoïdale hybride selon l'une quelconque des revendications 1 à 5,
**caractérisée en ce que**
les formes concaves et convexes (34/38) sont mises en forme dans une coque en plastique (6a) des éléments de support (6).

7. Courroie trapézoïdale hybride selon l'une quelconque des revendications 1 à 6,
**caractérisée en ce que**
la fixation et le centrage des éléments d'amortissement (34) s'effectue
- par engagement positif dans le matériau de noyau (16) et la coque en plastique (6a),
- par engagement positif uniquement dans la coque en plastique (6a) et/ou
- par engagement par liaison de matière.

8. Courroie trapézoïdale hybride selon l'une quelconque des revendications 1 à 6,
**caractérisée en ce que**
l'amortissement et le guidage s'effectuent
- par agencement d'éléments d'amortissement (34) sur le côté frontal ou arrière des éléments de support (6) et/ou
- par des formes mutuellement associées (34/38) sur le côté arrière d'un élément de support (6) et le côté frontal de l'autre élément de support (6).

9. Courroie trapézoïdale hybride selon l'une quelconque des revendications 1 à 8,
**caractérisée en ce que**
les éléments d'amortissement (34) sont disposés
- centralement sur le côté frontal et/ou arrière,
- sur l'axe de symétrie par rapport à la direction de la courroie sur la partie supérieure de l'élément de support (6) et/ou
- symétriquement par rapport à l'axe de symétrie par rapport à la direction de la largeur de la courroie sur la partie supérieure de l'élément de support (6).
